# EUROPEAN PATENT SPECIFICATION

(11) **EP 3 378 631 B1**
(45) Date of publication and mention of the grant of the patent: **15.07.2020**
(21) Application number: 16866383.9
(22) Date of filing: 17.11.2016
(51) Int. Cl.: B29C 65/48, B32B 7/02, B32B 9/00, B65D 65/40, C08J 7/04, B32B 15/08, B32B 23/04, B32B 27/08, B32B 27/16, B32B 27/18, B32B 27/32, B32B 27/34, B32B 27/36, B32B 7/023

(54) **GAS BARRIER LAMINATED FILM AND WAVELENGTH CONVERSION SHEET**
GASBARRIEREVERBUNDFOLIE UND WELLENLÄNGENUMWANDLUNGSFOLIE
FILM STRATIFIÉ BARRIÈRE AU GAZ ET FEUILLE DE CONVERSION DE LONGUEUR D'ONDE

(30) Priority: 20.11.2015 JP 2015227718
(43) Date of publication of application: 26.09.2018
(73) Proprietor: Toppan Printing Co., Ltd., Tokyo 110-0016 (JP)
(72) Inventor: MURATA, Koji, Tokyo 110-0016 (JP); SHODA, Ryo, Tokyo 110-0016 (JP)
(74) Representative: TBK
(86) International application number: PCT/JP2016/084087
(87) International publication number: WO 2017/086382

(56) References cited:
- EP-A1- 1 634 697
- EP-A1- 2 289 983
- EP-A1- 2 289 983
- JP-A- 2007 523 769
- JP-A- 2013 067 109
- JP-A- 2013 180 425
- US-A1- 2005 175 831
- US-A1- 2014 308 494
- DATABASE WPI Week 201363 Thomson Scientific, London, GB; AN 2013-N19868 XP002792180, & JP 2013 180425 A (DAINIPPON PRINTING CO LTD) 12 September 2013 (2013-09-12) & JP 2013 180425 A (DAINIPPON PRINTING CO LTD) 12 September 2013 (2013-09-12)

## Description

### [Technical Field]

The present invention relates to a gas barrier laminated film and a wavelength conversion sheet.

### [Background Art]

In light-emitting units, such as backlight units of liquid crystal displays and electroluminescent light-emitting units, emitters or phosphors may be in contact with oxygen or moisture for a long period of time and the performance as emitters or phosphors may thereby be reduced. Therefore, these light-emitting units often use gas barrier laminated films having a structure in which a barrier layer having gas barrier properties is formed in a polymer film, as packaging materials or protective materials for the emitters, phosphors, or the like.

As a gas barrier laminated film used as a packaging material for food etc., for example, PTL 1 discloses a laminated body including a first vapor deposited thin film layer, a gas-barrier intermediate layer, and a second vapor deposited thin film layer, which are laminated on a substrate. This laminated body has a structure in which two vapor deposited thin film layers are laminated with a gas-barrier intermediate layer interposed therebetween, whereby excellent gas barrier properties are realized. PTL 2 discloses a gas barrier laminated body as specified in the preamble of claim 1.

### [Citation List]

### [Patent Literature]

[PTL 1] WO 2002/083408 A
[PTL 2] EP 1 634 697 A1

### [Summary of the Invention]

### [Technical Problem]

Gas barrier laminated films used as packaging materials or protective materials for emitters, phosphors, or the like, are required to have not only gas barrier properties, but also high transparency. More specifically, the gas barrier laminated films are required to have high transmittance of blue light at a wavelength of around 450 nm, green light at a wavelength of around 550 nm, and red light at a wavelength of around 650 nm; particularly when the gas barrier laminated films are used as protective materials of wavelength conversion sheets, blue LEDs are mainly used as light sources of light whose wavelength is to be converted, and the gas barrier laminated films are thus required to have high transmittance at a wavelength of 450 nm, which is the peak wavelength of blue LEDs. For such requirements, laminated bodies such as the one disclosed in PTL 1 mentioned above failed to obtain sufficiently high transmittance of light particularly at a wavelength of 450 nm.

The present invention has been made in consideration of the above problems of the prior art, and an object of the present invention is to provide a gas barrier laminated film that can obtain high transmittance of light at wavelengths of 450 nm, 550 nm, and 650 nm, particularly high transmittance of blue light at a wavelength of 450 nm, and to also provide a wavelength conversion sheet using the same.

### [Solution to Problem]

The present inventors conducted extensive research to achieve the above object, and consequently found that in laminated bodies such as the one disclosed in PTL 1 mentioned above, optical thin-film interference occurred between two vapor deposited thin film layers each containing metal, inorganic oxide, or the like, thereby reducing the transmittance of blue light at a wavelength of 450 nm, which is a short wavelength side of the visible light region. The present inventors also found that optical thin-film interference between two thin film layers can be reduced by adjusting the distance between the two thin film layers in a specific layer structure, and controlling the refractive index of a layer provided between the thin film layers.

Specifically, the present invention provides a gas barrier laminated film including the features specified in claim 1.

The above gas barrier laminated film has a structure in which two barrier films (first and second barrier films), each of which has an inorganic thin film layer and a gas barrier covering layer formed on a substrate, are bonded together through an adhesive layer, the distance between the two inorganic thin film layers is 1.0 µm or more, and the refractive index difference between each of the two gas barrier covering layers and the adhesive layer disposed between the two inorganic thin film layers is 0.05 or less; therefore, optical thin-film interference between the two inorganic thin film layers can be reduced, which consequently makes it possible to obtain high transmittance of light at wavelengths of 450 nm, 550 nm, and 650 nm, particularly high transmittance of blue light at a wavelength of 450 nm. Moreover, because the distance between the two inorganic thin film layers is 1.0 µm or more, even if variation is generated in the thickness of the adhesive layer or the first and second gas barrier covering layers, the generation of variation in the transmittance of blue light at a wavelength of 450 nm can be suppressed, and high transmittance of blue light at a wavelength of 450 nm can be stably obtained. Furthermore, because the gas barrier laminated film has a structure in which two barrier films are laminated, excellent gas barrier properties (moisture barrier properties and oxygen barrier properties) can be obtained.

In the gas barrier laminated film, the distance between the first inorganic thin film layer and the second inorganic thin film layer is preferably 20 µm or less. Because the distance is 20 µm or less, the adhesive layer can be prevented from being thick to thereby prevent moisture and oxygen from easily entering from the end portion of the adhesive layer, and excellent gas barrier properties can be ensured for the gas barrier laminated film. Moreover, because the distance is 20 µm or less, the material cost can be suppressed.

The present invention also provides a wavelength conversion sheet including a phosphor layer containing one or more phosphors, and the above-mentioned gas barrier laminated film of the present invention. Because it includes the gas barrier laminated film of the present invention, the wavelength conversion sheet can obtain high transmittance of light at wavelengths of 450 nm, 550 nm, and 650 nm, particularly high transmittance of blue light at a wavelength of 450 nm. The wavelength conversion sheet can suitably be used in a backlight unit including a light guide plate and an LED light source the inside of which is provided with a plurality of LED elements emitting blue light.

### [Advantageous Effects of the Invention]

The present invention can provide a gas barrier laminated film that can obtain high transmittance of light at wavelengths of 450 nm, 550 nm, and 650 nm, particularly high transmittance of blue light at a wavelength of 450 nm, and can also provide a wavelength conversion sheet using the same.

### [Brief Description of the Drawings]

Fig. 1 is a schematic cross-sectional view showing one embodiment of the gas barrier laminated film of the present invention.
Fig. 2 is a schematic cross-sectional view showing one embodiment of the wavelength conversion sheet of the present invention.
Fig. 3 is a schematic cross-sectional view showing one embodiment of a backlight unit using the wavelength conversion sheet of the present invention.

### [Description of Embodiments]

Preferred embodiments of the present invention are described in detail below with reference to the drawings. In the drawings, the same reference signs are assigned to the same or corresponding parts, and redundant description is omitted. Moreover, the dimension ratios in the drawings are not limited to the ratios shown therein.

### [Gas Barrier Laminated Film]

The gas barrier laminated film of the present embodiment includes at least: a first barrier film having a first substrate, a first inorganic thin film layer formed on the first substrate, and a first gas barrier covering layer formed on the first inorganic thin film layer; a second barrier film having a second substrate, a second inorganic thin film layer formed on the second substrate, and a second gas barrier covering layer formed on the second inorganic thin film layer; and an adhesive layer that bonds together the first barrier film and the second barrier film. Here, the first barrier film and the second barrier film are laminated through the adhesive layer so that the first gas barrier covering layer and the second gas barrier covering layer are opposite to each other. Moreover, the distance between the first inorganic thin film layer and the second inorganic thin film layer is 1.0 µm or more, and the refractive index difference between the first gas barrier covering layer and the adhesive layer, and the refractive index difference between the second gas barrier covering layer and the adhesive layer are both 0.05 or less. The gas barrier laminated film of the present embodiment may further include a matt layer on the first barrier film or the second barrier film.

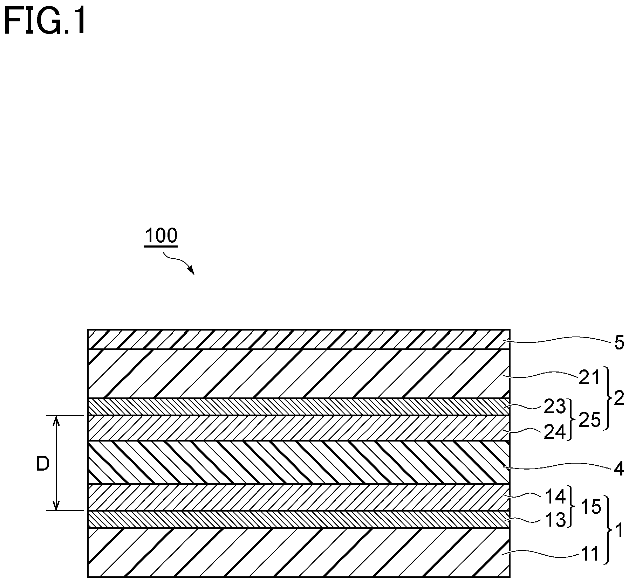

Fig. 1 is a schematic cross-sectional view showing one embodiment of the gas barrier laminated film of the present invention. The gas barrier laminated film 100 shown in Fig. 1 includes a first barrier film 1, a second barrier film 2, an adhesive layer 4 that bonds together the first barrier film 1 and the second barrier film 2, and a matt layer 5 formed on the second barrier film 2. Here, the first barrier film 1 has a first substrate 11 and a first barrier layer 15 having a first inorganic thin film layer 13 and a first gas barrier covering layer 14. Similarly, the second barrier film 2 has a second substrate 21 and a second barrier layer 25 having a second inorganic thin film layer 23 and a second gas barrier covering layer 24. The first barrier film 1 and the second barrier film 2 are laminated through the adhesive layer 4 so that the first gas barrier covering layer 14 and the second gas barrier covering layer 24 are opposite to each other. The matt layer 5 is provided on the second substrate 21 of the second barrier film 2.

In the gas barrier laminated film 100, it is necessary that the distance D between the first inorganic thin film layer 13 and the second inorganic thin film layer 23 be 1.0 µm or more. The distance D can be adjusted by controlling the thickness of each layer provided between the first inorganic thin film layer 13 and the second inorganic thin film layer 23. In the gas barrier laminated film 100, the total thickness of the first gas barrier covering layer 14, the second gas barrier covering layer 24, and the adhesive layer 4 is regarded as the distance D. Because the distance D is set to 1.0 µm or more, optical thin-film interference can be prevented from occurring between the first inorganic thin film layer 13 and the second inorganic thin film layer 23, and the gas barrier laminated film 100 can obtain high transmittance of light at wavelengths of 450 nm, 550 nm, and 650 nm, particularly high transmittance of blue light at a wavelength of 450 nm. If the distance D is less than 1.0 µm, optical thin-film interference is likely to occur between the first inorganic thin film layer 13 and the second inorganic thin film layer 23, and the transmittance of blue light at a wavelength of 450 nm is particularly reduced. In addition, if the distance D is less than 1.0 µm, due to a very slight variation in the distance D (i.e., a very slight variation in the thickness of the adhesive layer 4 or the first and second gas barrier covering layers 14 and 24), variation is likely to occur in the transmittance of the gas barrier laminated film 100 for blue light at a wavelength of 450 nm, thereby making it difficult to stably obtain high transmittance.

In terms of further reducing thin-film interference and stably obtaining higher transmittance of blue light at a wavelength of 450 nm, the distance D is preferably 2.0 µm or more, more preferably 3.0 µm or more, and even more preferably 5.0 µm or more. In contrast, if the distance D is overly large, the entire thickness of the gas barrier laminated film 100 tends to increase, and the material cost tends to be higher. Moreover, if the distance D is overly large, the thickness of the adhesive layer 4 inevitably increases. The moisture permeability and oxygen permeability of the adhesive layer 4 are generally much higher than those of the first and second substrates 11 and 21; therefore, if the thickness of the adhesive layer 4 increases, moisture and oxygen can easily enter from the end portion of the adhesive layer 4, and the bonding effect of the two barrier films (the effect of complementing defects of one barrier film by the other barrier film) is reduced, thereby reducing the gas barrier properties of the gas barrier laminated film 100. In order to prevent the occurrence of such problems, the distance D is preferably 20 µm or less, more preferably 15 µm or less, and even more preferably 10 µm or less. Because the distance D is set to 20 µm or less, the material cost can be suppressed, and excellent gas barrier properties can be obtained.

In the gas barrier laminated film 100, it is necessary that the refractive index difference (ΔR₁) between the first gas barrier covering layer 14 and the adhesive layer 4, and the refractive index difference (ΔR₂) between the second gas barrier covering layer 24 and the adhesive layer 4 both be 0.05 or less. Because the refractive index differences ΔR₁ and ΔR₂ are both 0.05 or less, optical thin-film interference can be prevented from occurring between the first inorganic thin film layer 13 and the second inorganic thin film layer 23, and the gas barrier laminated film 100 can particularly obtain high transmittance of blue light at a wavelength of 450 nm. In terms of further increasing the transmittance of blue light at a wavelength of 450 nm, the refractive index differences ΔR₁ and ΔR₂ are both preferably 0.03 or less, and more preferably 0.01 or less. The refractive index differences ΔR₁ and ΔR₂ can be adjusted by selecting the materials of the adhesive layer 4 and the first and second gas barrier covering layers 14 and 24.

Each layer constituting the gas barrier laminated film 100 is described in detail below. In the gas barrier laminated film 100, the structures of the first substrate 11 and the second substrate 21, the structures of the first inorganic thin film layer 13 and the second inorganic thin film layer 23, and the structures of the first gas barrier covering layer 14 and the second gas barrier covering layer 24 each may be the same or different.

### (Substrates)

Although it is not limited, the first and second substrates 11 and 21 are preferably polymer films, and more preferably polymer films having a total light transmittance of 85% or more. Examples of materials of the polymer films include, but are not limited to, polyesters, such as polyethylene terephthalate, polybutylene terephthalate, and polyethylene naphthalate; polyamides, such as nylon; polyolefins, such as polypropylene and cycloolefin; polycarbonates; triacetyl cellulose; and the like. The polymer films are preferably polyester films, polyamide films, or polyolefin films; more preferably polyester films or polyamide films; and even more preferably polyethylene terephthalate films, in terms of increasing transparency, processing suitability, and adhesion. Moreover, the polyethylene terephthalate films are preferably biaxially oriented polyethylene terephthalate films, in terms of increasing transparency and gas barrier properties.

The polymer films may contain, if necessary, additives, such as antistatic agents, ultraviolet absorbing agents, plasticizers, and lubricants. Moreover, the surface of the polymer films may be subjected to corona treatment, flame treatment, or plasma treatment.

The thickness of the first and second substrates 11 and 21 is not limited, but is preferably 3 µm or more and 100 µm or less, and more preferably 5 µm or more and 50 µm or less. Processing is easy when the thickness is 3 µm or more, whereas the total thickness of the gas barrier laminated film 100 can be reduced when the thickness is 100 µm or less.

### (Inorganic Thin Film Layers)

The first and second inorganic thin film layers 13 and 23 can be formed by, for example, a vacuum deposition method, a sputtering method, or a plasma enhanced CVD (PECVD) method. The vacuum deposition method is more preferably a resistance heating type vacuum deposition method, an electron-beam heating type vacuum deposition method, or an induction heating type vacuum deposition method; and the sputtering method is more preferably a reactive sputtering method and a dual magnetron sputtering method. The sputtering method is preferable in terms of film uniformity, whereas the vacuum deposition method is preferable in terms of cost; any of these methods can be selected depending on the purpose and application.

Examples of methods for generating plasma by sputtering or PECVD include a DC (direct current) method, a RF (radio frequency) method, a MF (middle frequency) method, a DC pulse method, a RF pulse method, a DC+RF superposition method, and the like.

Vacuum deposition can generally form films of metals, or of oxides, nitrides, or oxynitrides of silicon, etc. The first and second inorganic thin film layers 13 and 23 are preferably films made of metals, such as aluminum, titanium, copper, indium, or tin; oxides of such metals (e.g., alumina); silicon; or silicon oxides. In addition to oxides of metals or silicon, films of nitrides or oxynitrides of metals or silicon may be formed. Moreover, films containing a plurality of metals may also be formed. The above-mentioned aluminum, titanium, copper, and indium, as well as oxides, nitrides, and oxynitrides of silicon are excellent in both transparency and barrier properties. Silicon-containing oxides or oxynitrides are particularly preferable because they have high barrier properties.

The thickness of the first and second inorganic thin film layers 13 and 23 formed by vacuum deposition is preferably 5 nm or more and 100 nm or less. When the thickness of the first and second inorganic thin film layers 13 and 23 is 5 nm or more, there is a tendency that more excellent barrier properties can be obtained. Moreover, when the thickness of the first and second inorganic thin film layers 13 and 23 is 100 nm or less, there is a tendency that the formation of cracks can be suppressed, thereby preventing the decrease in the moisture barrier properties and oxygen barrier properties caused by cracks. Furthermore, when the thickness of the first and second inorganic thin film layers 13 and 23 is 100 nm or less, the cost can be reduced owing to the reduced amount of material used, the shortened film formation time, etc.; thus, a thickness of 100 nm or less is preferable in terms of economic efficiency.

### (Gas Barrier Covering Layers)

The first and second gas barrier covering layers 14 and 24 are provided to prevent various kinds of secondary damage in subsequent processes, and to impart high barrier properties. The first and second gas barrier covering layers 14 and 24 may contain a siloxane bond. The first and second gas barrier covering layers 14 and 24 may be formed in air or under vacuum. When the first and second gas barrier covering layers 14 and 24 are formed in air, these layers can be formed by, for example, applying a coating liquid to the first and second inorganic thin film layers 13 and 23, followed by drying and curing, wherein the coating liquid contains a compound having polarity, such as polyvinyl alcohol, polyvinyl pyrrolidone, and ethylene vinyl alcohol; a compound containing chlorine, such as polyvinylidene chloride; a compound containing a Si atom; a compound containing a Ti atom; a compound containing an Al atom; a compound containing a Zr atom; etc.

When the first and second gas barrier covering layers 14 and 24 are formed in air, specific examples of the method for applying the coating liquid include coating methods using a gravure coater, a dip coater, a reverse coater, a wire-bar coater, a die coater, or the like.

A compound containing a siloxane bond is preferably formed by, for example, the reaction of a silane compound with a silanol group. Such a silane compound is, for example, a compound represented by the following formula (1):

R¹ₙ(OR²)₄₋ₙSi ... (1)

wherein n represents an integer of 0 to 3, and R¹ and R² each independently represent a hydrocarbon group, and preferably a C₁-C₄ alkyl group.

Examples of the compound represented by the above formula (1) include tetramethoxysilane, tetraethoxysilane, tetrapropoxysilane, tetrabutoxysilane, methyltrimethoxysilane, methyltriethoxysilane, dimethyldimethoxysilane, dimethyldiethoxysilane, and the like. Polysilazane, which contains nitrogen, may also be used.

Moreover, for the first and second gas barrier covering layers 14 and 24, a material made from a precursor containing other metal atoms may be used. The compound containing a Ti atom is, for example, a compound represented by the following formula (2):

R¹ₙ(OR²)₄₋ₙTi ... (2)

wherein n represents an integer of 0 to 3, and R¹ and R² each independently represent a hydrocarbon group, and preferably a C₁-C₄ alkyl group.

Examples of the compound represented by the above formula (2) include tetramethoxytitanium, tetraethoxytitanium, tetraisopropoxytitanium, tetrabutoxytitanium, and the like.

The compound containing an Al atom is, for example, a compound represented by the following formula (3):

R¹ₘ(OR²)₃₋ₘAl ... (3)

wherein m represents an integer of 0 to 2, and R¹ and R² each independently represent a hydrocarbon group, and preferably a C₁-C₄ alkyl group.

Examples of the compound represented by the above formula (3) include trimethoxyaluminum, triethoxyaluminum, triisopropoxyaluminum, tributoxyaluminum, and the like.

The compound containing a Zr atom is, for example, a compound represented by the following formula (4):

R¹ₙ(OR²)₄₋ₙZr ... (4)

wherein n represents an integer of 0 to 3, and R¹ and R² each independently represent a hydrocarbon group, and preferably a C₁-C₄ alkyl group.

Examples of the compound represented by the above formula (4) include tetramethoxyzirconium, tetraethoxyzirconium, tetraisopropoxyzirconium, tetrabutoxyzirconium, and the like.

When the first and second gas barrier covering layers 14 and 24 are formed in air, the above coating liquid is cured after application. Examples of the curing method include, but are not limited to, ultraviolet curing, heat curing, and the like. In the case of ultraviolet curing, the coating liquid may contain a polymerization initiator and a compound having a double bond. Further, heat aging may be performed, if necessary.

Another usable method for forming the first and second gas barrier covering layers 14 and 24 in air is a method that uses, as a gas barrier covering layer, a reaction product obtained by dehydration condensation of inorganic oxide particles of magnesium, calcium, zinc, aluminum, silicon, titanium, zirconium, or the like, through phosphorus atoms derived from a phosphorus compound. Specifically, a functional group (e.g., a hydroxyl group) present on the surface of the inorganic oxide, and a portion of the phosphorus compound reactive with the inorganic oxide (e.g., halogen atoms directly bonded to phosphorus atoms, or oxygen atoms directly bonded to phosphorus atoms) undergo a condensation reaction for bonding. The reaction product can be obtained by, for example, applying a coating liquid containing an inorganic oxide and a phosphorus compound to the surface of the first and second inorganic thin film layers 13 and 23, and heating the formed coating films to thereby promote the reaction in which the inorganic oxide particles are bonded together through phosphorus atoms derived from the phosphorus compound. The lower limit of the temperature of heat treatment is 110°C or more, preferably 120°C or more, more preferably 140°C or more, and even more preferably 170°C or more. If the heat treatment temperature is low, it is difficult to obtain a sufficient reaction rate, thereby causing a reduction in productivity. The preferable upper limit of the temperature of heat treatment varies depending on the type of substrate, etc., but is 220°C or less, and preferably 190°C or less. Heat treatment can be performed, for example, in air, a nitrogen atmosphere, or an argon atmosphere.

When the first and second gas barrier covering layers 14 and 24 are formed in air, the above coating liquid may further contain a resin, as long as aggregation etc. do not occur. Specific examples of the resin include acrylic resins, polyester resins, and the like. Of these resins, the above coating liquid preferably contains a resin that has high compatibility with other materials in the coating liquid.

The above coating liquid may further contain, if necessary, a filler, a leveling agent, an antifoamer, an ultraviolet absorbing agent, an antioxidant, a silane coupling agent, a titanium chelating agent, and the like.

The thickness of the first and second gas barrier covering layers 14 and 24 formed in air is 100 nm to 1000 nm, as cured film thickness. When the thickness of the first and second gas barrier covering layers 14 and 24 formed in air is in this range, there is a tendency that the films can be easily formed and that cracks or curls can be prevented.

The refractive indexes of the first and second gas barrier covering layers 14 and 24 are not limited, as long as they are values that enable the refractive index differences ΔR₁ and ΔR₂ from the adhesive layer 4 to be 0.05 or less; however, the refractive indexes of the first and second gas barrier covering layers 14 and 24 are preferably 1.40 to 1.60, in terms of their materials etc.

### (Adhesive Layer)

As shown in Fig. 1, the adhesive layer 4 is provided between the first barrier film 1 and the second barrier film 2 so as to bond together and laminate the first barrier film 1 and the second barrier film 2. For the adhesive layer 4, a general adhesive or pressure-sensitive adhesive for polymer films can be used, and is suitably selected depending on the surface of each of the first barrier film 1 and the second barrier film 2 on the side to be bonded together. Candidate materials for the adhesive layer 4 include epoxy-based, polyester-based, acrylic-based, rubber-based, phenol-based, and urethane-based adhesives or pressure-sensitive adhesives.

Examples of the method for applying the adhesive or pressure-sensitive adhesive include coating methods using a gravure coater, a dip coater, a reverse coater, a wire-bar coater, a die coater, or the like.

The thickness of the adhesive layer 4 is preferably 0.5 µm or more and 20 µm or less. Because the thickness of the adhesive layer 4 is 0.5 µm or more, there is a tendency that sufficient adhesion can be obtained, and that the distance D between the first and second inorganic thin film layers 13 and 23 can be easily set to 1.0 µm or more; whereas because the thickness of the adhesive layer 4 is 20 µm or less, the total thickness of the gas barrier laminated film 100 can be reduced, and there is a tendency that an increase in cost can be suppressed. Moreover, because the thickness of the adhesive layer 4 is 20 µm or less, moisture and oxygen can be prevented from entering from the end portion of the adhesive layer 4, and the reduction in the gas barrier properties of the gas barrier laminated film 100 can be suppressed.

Furthermore, aging can be performed after the first barrier film 1 and the second barrier film 2 are bonded together through the adhesive layer 4. Aging is performed, for example, at 20 to 80°C for 1 to 10 days.

The refractive index of the adhesive layer 4 is not limited, as long as it is a value that allows the refractive index differences ΔR₁ and ΔR₂ from the respective first and second gas barrier covering layers 14 and 24 to be 0.05 or less; however, the refractive index of the adhesive layer 4 is preferably 1.40 to 1.60 because the refractive index differences ΔR₁ and ΔR₂ can be easily reduced, and the refractive index of the adhesive layer 4 is most preferably the same value as the refractive indexes of the first and second gas barrier covering layers 14 and 24.

The adhesive layer 4 may contain fine particles in order to adjust the refractive index. Examples of fine particles include porous silica fine particles and hollow silica as low refractive index-adjusting agents, and zirconia fine particles, titania fine particles, and the like as high refractive index-adjusting agents. These can be used singly or in a combination of two or more. The content of fine particles is preferably 25 mass% or less based on the total amount of the adhesive layer 4, in terms of maintaining sufficient adhesion. The mean particle size of fine particles is preferably 0.5 nm or more and 200 nm or less, in terms of maintaining sufficient adhesion and obtaining sufficient refractive index-adjusting function. The refractive index of the adhesive layer 4 can be adjusted to a desired value (e.g., a refractive index of 1.40 to 1.60) by suitably adjusting the type and content of fine particles to be contained.

The adhesive layer 4 may contain, if necessary, a curing agent, an antistatic agent, a silane coupling agent, an ultraviolet absorbing agent, an antioxidant, a leveling agent, a dispersing agent, and the like.

### (Matt layer)

The matt layer 5 is provided on the surface of the second substrate 21 of the second barrier film 2 in order to exhibit one or more optical functions and antistatic functions. Here, examples of optical functions include, but are not limited to, an interference fringe (moire) prevention function, an antireflection function, a diffusion function, and the like. Of these functions, it is preferable that the matt layer 5 have at least an interference fringe prevention function as an optical function. The present embodiment describes a case where the matt layer 5 has at least an interference fringe prevention function.

The matt layer 5 may have a structure containing a binder resin and fine particles. Fine irregularities may be formed on the surface of the matt layer 5 in such a manner that the fine particles are embedded in the binder resin so that part of the fine particles is exposed from the surface of the matt layer 5. Because such a matt layer 5 is provided on the surface of the gas barrier laminated film, the formation of interference fringes, such as Newton's rings, can be more sufficiently prevented; as a result, it becomes possible to obtain a highly efficient, highly accurate, and long-life light-emitting device.

The binder resin is not limited, and resins having excellent optical transparency can be used. More specific examples include thermoplastic resins, thermosetting resins, and ionizing radiation curable resins, such as polyester-based resins, acrylic-based resins, acrylic urethane-based resins, polyester acrylate-based resins, polyurethane acrylate-based resins, urethane-based resins, epoxy-based resins, polycarbonate-based resins, polyamide-based resins, polyimide-based resins, melamine-based resins, and phenol-based resins. Further, silica binders can also be used, in addition to organic resins. Among these, it is desirable to use acrylic-based resins and urethane-based resins because of the wide range of materials, and it is more desirable to use acrylic-based resins because of their excellent light resistance and optical characteristics. These can be used singly or in a combination of two or more.

Examples of fine particles include, but are not limited to, inorganic fine particles of silica, clay, talc, calcium carbonate, calcium sulfate, barium sulfate, titanium oxide, alumina, or the like; and organic fine particles of styrene resin, urethane resin, silicone resin, acrylic resin, polyamide resin, or the like. Among these, fine particles containing silica, acrylic resin, urethane resin, polyamide resin, or the like, and having a refractive index of 1.40 to 1.55 are preferably used as the fine particles, in terms of light transmittance. Fine particles having a low refractive index are expensive, whereas fine particles having an overly high refractive index tend to impair light transmittance. These can be used singly or in a combination of two or more.

The mean particle size of fine particles is preferably 0.1 to 30 µm, and more preferably 0.5 to 10 µm. When the mean particle size of fine particles is 0.1 µm or more, there is a tendency that excellent interference fringe prevention function can be obtained; whereas when the mean particle size of fine particles is 30 µm or less, there is a tendency that the transparency is more improved.

The content of fine particles in the matt layer 5 is preferably 0.5 to 30 mass%, and more preferably 3 to 10 mass%, based on the total amount of the matt layer 5. When the content of fine particles is 0.5 mass% or more, there is a tendency that the light diffusion function and the effect of preventing the formation of interference fringes are more enhanced; whereas when the content of fine particles is 30 mass% or less, the luminance is not reduced.

The matt layer 5 can be formed by applying a coating liquid containing a binder resin and fine particles described above to the surface of the first barrier film 1 or the second barrier film 2, followed by drying and curing. Examples of the coating method include coating methods using a gravure coater, a dip coater, a reverse coater, a wire-bar coater, a die coater, or the like.

The thickness of the matt layer 5 is preferably 0.1 to 20 µm, and more preferably 0.3 to 10 µm. Because the thickness of the matt layer 5 is 0.1 µm or more, there is a tendency that a uniform film can be easily obtained, and that sufficient optical function can be easily obtained. In contrast, because the thickness of the matt layer 5 is 20 µm or less, when fine particles are used in the matt layer 5, there is a tendency that the fine particles are exposed to the surface of the matt layer 5, whereby an irregularity-imparting effect can be easily obtained.

### [Wavelength Conversion Sheet]

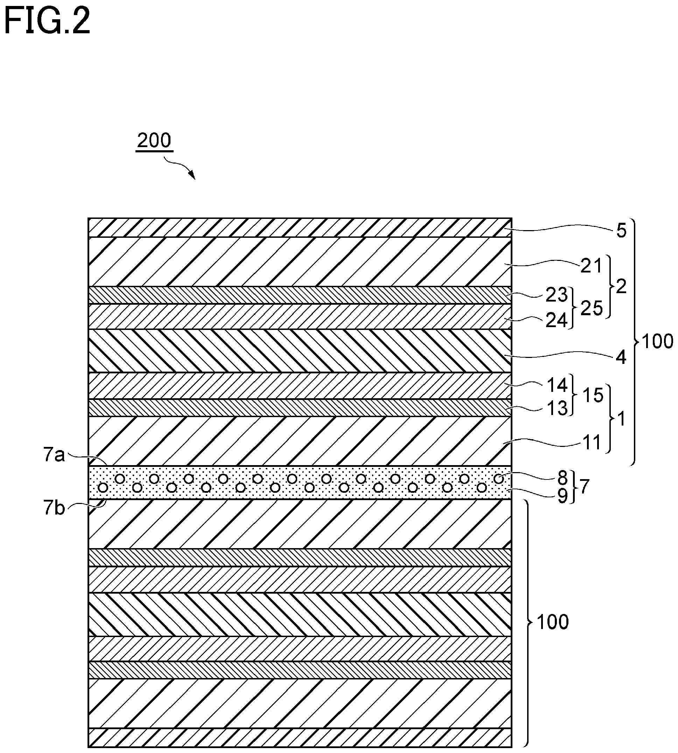

Fig. 2 is a schematic cross-sectional view showing one embodiment of the wavelength conversion sheet of the present invention. The wavelength conversion sheet shown in Fig. 2 contains phosphors, such as quantum dots, and can be used, for example, in a backlight unit for LED wavelength conversion.

The wavelength conversion sheet 200 shown in Fig. 2 roughly includes a phosphor layer (wavelength conversion layer) 7 containing phosphors, and gas barrier laminated films 100 and 100 each provided on one surface 7a side of the phosphor layer 7 and the other surface 7b side. This provides a structure in which the phosphor layer 7 is wrapped (i.e., sealed) between the gas barrier laminated films 100 and 100. Here, a structure in which the phosphor layer 7 is sandwiched between a pair of the gas barrier laminated films 100 and 100 is preferable because it is necessary to impart barrier properties to the phosphor layer 7. Each layer constituting the wavelength conversion sheet 200 is described in detail below.

### (Gas Barrier Laminated Films)

The gas barrier laminated film 100 shown in Fig. 1 can be used as the gas barrier laminated films 100 and 100. In the wavelength conversion sheet 200, the gas barrier laminated film 100 disposed on one surface 7a side of the phosphor layer 7, and the gas barrier laminated film 100 disposed on the other surface 7b side may be the same or different.

### (Phosphor Layer)

The phosphor layer 7 is a thin film having a thickness of several tens to several hundreds of µm and containing a sealing resin 9 and phosphors 8. The sealing resin 9 can be, for example, a photosensitive resin or a thermosetting resin. One or more types of phosphors 8 are sealed in a mixed state in the inside of the sealing resin 9. When the phosphor layer 7 and a pair of the gas barrier laminated films 100 and 100 are laminated, the sealing resin 9 plays the role of bonding them together and filling gaps between them. Moreover, the phosphor layer 7 may include two or more laminated phosphor layers in which only one type of phosphor 8 is sealed. For two or more types of phosphors 8 used in such one or more phosphor layers, those having the same excitation wavelength are selected. The excitation wavelength is selected based on the wavelength of light emitted from a LED light source. The fluorescent colors of two or more types of phosphors 8 are different from each other. When a blue LED (peak wavelength: 450 nm) is used as the LED light source, and two types of phosphors 8 are used, their fluorescent colors are preferably red and green. Each fluorescence wavelength and the wavelength of light emitted from the LED light source are selected based on the spectral characteristics of the color filter. The fluorescence peak wavelength is, for example, 650 nm for red, and 550 nm for green.

Next, the particle structure of the phosphors 8 is described. The phosphors 8 are preferably quantum dots, which have high color purity and for which an improvement in luminance can be expected. Examples of quantum dots include those in which a core as a light-emitting part is coated with a shell as a protective film. The above core is, for example, cadmium selenate (CdSe) or the like, and the above shell is, for example, zinc sulfide (ZnS) or the like. Surface defects of CdSe particles are coated with ZnS, which has a large bandgap, to thereby improve the quantum efficiency. Moreover, the phosphors 8 may be those in which a core is doubly coated with a first shell and a second shell. In this case, the core can be CdSe, the first shell can be zinc selenide (ZnSe), and the second shell can be ZnS. Further, phosphors 8 other than quantum dots may be YAG:Ce or the like.

The mean particle size of the phosphors 8 is preferably 1 to 20 nm. Moreover, the thickness of the phosphor layer 7 is preferably 1 to 500 µm.

The content of the phosphors 8 in the phosphor layer 7 is preferably 1 to 20 mass%, and more preferably 3 to 10 mass%, based on the total amount of the phosphor layer 7.

Usable examples of the sealing resin 9 include thermoplastic resins, thermosetting resins, ultraviolet-curing resins, and the like. These resins can be used singly or in a combination of two or more.

Examples of thermoplastic resins include cellulose derivatives, such as acetyl cellulose, nitrocellulose, acetyl butyl cellulose, ethyl cellulose, and methyl cellulose; vinyl-based resins, such as vinyl acetate and copolymers thereof, vinyl chloride and copolymers thereof, and vinylidene chloride and copolymers thereof; acetal resins, such as polyvinyl formal and polyvinyl butyral; acrylic-based resins, such as acrylic resins and copolymers thereof, and methacrylic resins and copolymers thereof; polystyrene resins; polyamide resins; linear polyester resins; fluororesins; polycarbonate resins; and the like.

Examples of thermosetting resins include phenol resins, urea melamine resins, polyester resins, silicone resins, and the like.

Examples of ultraviolet-curing resins include photopolymerizable prepolymers, such as epoxy acrylate, urethane acrylate, and polyester acrylate. Furthermore, such a photopolymerizable prepolymer can be used as a main component, and a monofunctional or multifunctional monomer can be used as a diluent.

### [Backlight Unit]

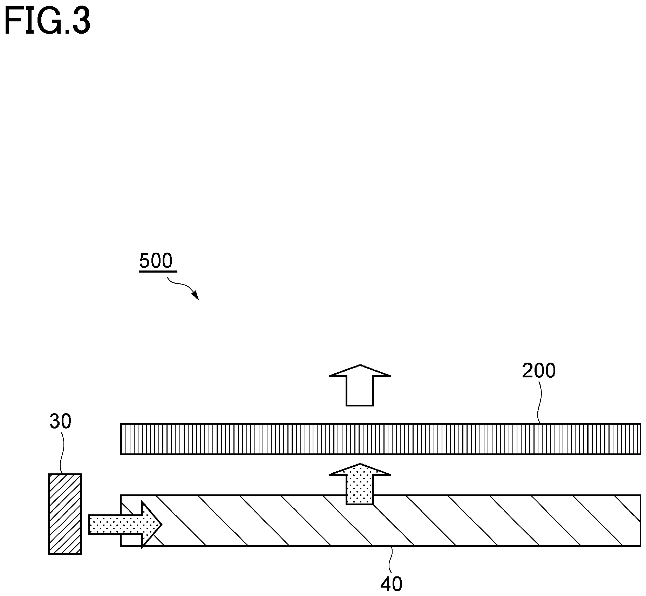

Fig. 3 shows one embodiment of a backlight unit. A backlight unit 500 of the present embodiment includes an LED (light-emitting diode) light source 30, a light guide plate 40, and a wavelength conversion sheet 200. Further, the backlight unit 500 may include a reflection plate, a diffusion plate, a prism sheet, etc., although they are not shown in the drawing.

The LED light source 30 is disposed on the side surface of the light guide plate 40, and the wavelength conversion sheet 200 is disposed on the light guide plate 40 (in the traveling direction of light). A plurality of LED elements emitting blue light is provided in the inside of the LED light source 30. The LED elements may be purple LEDs or shorter wavelength LEDs. The LED light source emits light toward the side surface of the light guide plate. In the case of a backlight unit using the wavelength conversion sheet 200 of the present embodiment, the emitted light is supposed to enter, for example, a layer (phosphor layer) 7 containing a mixture of an acrylic or epoxy resin and phosphors through a light guide plate.

The light guide plate 40 efficiently guides the light emitted from the LED light source 30, and a known material is used. Usable examples of the light guide plate 40 include acrylic films, polycarbonate films, cycloolefin films, and the like. The light guide plate 40 can be formed by, for example, a silk printing method, a molding method such as injection molding or extrusion molding, an ink-jet method, or the like. The thickness of the light guide plate 40 is, for example, 100 to 1000 µm.

The preferred embodiments of the present invention are described in detail above; however, the technical scope of the present invention is not limited to the above embodiments, and various modifications can be added within a range that does not depart from the scope of the present invention as specified in the claims. For example, the structure of the gas barrier laminated film 100, the structure of the wavelength conversion sheet 200, and the structure of the backlight unit 500 described above are merely examples, and these structures are not limited thereto.

Moreover, although the gas barrier laminated film 100 shown in Fig. 1 includes two barrier films (first and second barrier films 1 and 2), the gas barrier laminated film of the present invention may further include one or more barrier films other than the first and second barrier films 1 and 2. In this case, it is preferable that the distance between the inorganic thin film layer of the other barrier film and the first inorganic thin film layer 13 or the second inorganic thin film layer 23 adjacent thereto be also 1.0 µm or more, in terms of preventing the occurrence of optical thin-film interference between the plural inorganic thin film layers and sufficiently obtaining the effects of the present invention, although it is not limited thereto. That is, when the gas barrier laminated film includes 3 or more inorganic thin film layers, it is preferable that the distance between all the adjacent inorganic thin film layers be 1.0 µm or more, in terms of sufficiently obtaining the effects of the present invention.

Furthermore, in the gas barrier laminated film 100 shown in Fig. 1, an anchor coat layer may be provided between the first substrate 11 and the first inorganic thin film layer 13, and between the second substrate 21 and the second inorganic thin film layer 23, in order to enhance the adhesion between the substrates and the inorganic thin film layers. The anchor coat layer may have barrier properties for preventing the permeation of moisture and oxygen.

The anchor coat layer can be formed by, for example, using a resin selected from polyester resins, isocyanate resins, urethane resins, acrylic resins, polyvinyl alcohol resins, ethylene vinyl alcohol resins, vinyl-modified resins, epoxy resins, oxazoline group-containing resins, modified styrene resins, modified silicone resins, alkyl titanate, or the like. The anchor coat layer can be formed by using the above resins singly or using a composite resin combining two or more of the above resins.

The anchor coat layer can be formed by applying a solution containing the above resin(s) to the first and second substrates 11 and 21, followed by drying and curing. Examples of the coating method include coating methods using a gravure coater, a dip coater, a reverse coater, a wire-bar coater, a die coater, or the like.

The thickness of the anchor coat layer is preferably in the range of 5 to 500 nm, and more preferably in the range of 10 to 100 nm. Here, when the thickness of the anchor coat layer is 5 nm or more, there is a tendency that the adhesion between the first substrate 11 and the first inorganic thin film layer 13, and the adhesion between the second substrate 21 and the second inorganic thin film layer 23, as well as the barrier properties against moisture and oxygen are improved; whereas when the thickness of the anchor coat layer is 500 nm or less, there is a tendency that a uniform layer can be formed in which internal stress is sufficiently suppressed.

Moreover, in the wavelength conversion sheet 200 shown in Fig. 2, the two gas barrier laminated films are both the gas barrier laminated films 100 having the structure of the present invention shown in Fig. 1; however, one of the gas barrier laminated films may not have the structure of the present invention. In this case, the gas barrier laminated film disposed on the side of the LED light source and the light guide plate is preferably the gas barrier laminated film 100 having the structure of the present invention shown in Fig. 1, because blue light from the LED light source can be easily transmitted.

Moreover, in the wavelength conversion sheet 200 shown in Fig. 2, the matt layer 5 is provided on both surfaces; however, the matt layer 5 may be provided on only one surface.

Moreover, in the wavelength conversion sheet 200 shown in Fig. 2, the surface of each of the gas barrier laminated films 100 and 100 on the side in contact with the phosphor layer 7 may be subjected to modification treatment or provided with an easily-adhesive layer containing a urethane resin or the like, in order to enhance the adhesion between the phosphor layer 7 and each of the gas barrier laminated films 100 and 100.

Furthermore, in the wavelength conversion sheet 200 shown in Fig. 2, both end surfaces of the phosphor layer 7 (left and right end surfaces in the drawing not coated with the gas barrier laminated films 100 and 100) may be sealed with a sealing resin, or the entire phosphor layer 7 may be covered with a sealing resin.

The gas barrier laminated film of the present invention can be used, not only as a protective film of a wavelength conversion sheet, but also as an electroluminescent light-emitting unit, and a substrate (protective film) for industrial materials, such as solar cells.

### [Examples]

The present invention is described in more detail below based on Examples and Comparative Examples; however, the present invention is not limited to the following Examples.

### (Example 1)

A biaxially oriented polyethylene terephthalate (PET) film having a thickness of 23 µm was prepared as a first substrate. Using an electron-beam heating type vacuum deposition apparatus, a silicon oxide material (produced by Canon Optron Inc.) was evaporated by electron beam heating under a pressure of 1.5 x 10⁻² Pa, and a silicon oxide layer having a thickness of 30 nm was formed as a first inorganic thin film layer on the PET film. The acceleration voltage during deposition was 40 kV, and the emission current was 0.2 A.

A coating liquid obtained by mixing hydrolyzed tetraethoxysilane and polyvinyl alcohol at a mass ratio of 1:1 was applied to the first inorganic thin film layer by a bar-coating method, and dried and cured at 120°C for 1 minute, thereby forming a first gas barrier covering layer having a thickness of 300 nm. Thus, a first barrier film having a first substrate, a first inorganic thin film layer, and a first gas barrier covering layer was obtained.

Further, a second barrier film having a second substrate (thickness: 23 µm), a second inorganic thin film layer (thickness: 30 nm), and a second gas barrier covering layer (thickness: 300 nm) was produced by the same method as that for the above first barrier film.

Next, an adhesive was applied to the first gas barrier covering layer of the first barrier film to form an adhesive layer, and the adhesive layer was bonded together with the surface of the second barrier film on the side of the second gas barrier covering layer to form a laminated body. The adhesive layer was obtained by applying an acrylic adhesive coating liquid containing a mixture of an adhesive coating liquid containing an acrylic copolymer solution as a main agent (produced by Saiden Chemical Industry Co., Ltd.), and an isocyanate-based curing agent (trade name: D-110N, produced by Mitsui Chemicals, Inc.), followed by drying by heating. The thickness of the adhesive layer after curing was 5.0 µm.

Next, a coating liquid containing an acrylic resin and silica fine particles (mean particle size: 3 µm) was applied to the second substrate of the second barrier film by a wet-coating method, thereby forming a matt layer having a thickness of 3 µm. Thus, a gas barrier laminated film having the same structure as shown in Fig. 1 was obtained.

### (Example 2)

A gas barrier laminated film was obtained in the same manner as in Example 1, except that the coating amount of the adhesive was adjusted so that the thickness of the adhesive layer after curing was 3.0 µm.

### (Example 3)

A gas barrier laminated film was obtained in the same manner as in Example 1, except that the coating amount of the adhesive was adjusted so that the thickness of the adhesive layer after curing was 9.0 µm.

### (Example 4)

A gas barrier laminated film was obtained in the same manner as in Example 1, except that the adhesive used herein was obtained by adding a porous silica fine particle dispersion to the acrylic adhesive coating liquid used in Example 1, and the refractive index of the adhesive layer was adjusted to 1.45.

### (Example 5)

A gas barrier laminated film was obtained in the same manner as in Example 1, except that the adhesive used herein was obtained by adding a zirconia fine particle dispersion to the acrylic adhesive coating liquid used in Example 1, and the refractive index of the adhesive layer was adjusted to 1.55.

### (Comparative Example 1)

A biaxially oriented polyethylene terephthalate (PET) film having a thickness of 23 µm was prepared as a substrate. Using an electron-beam heating type vacuum deposition apparatus, a silicon oxide material (produced by Canon Optron Inc.) was evaporated by electron beam heating under a pressure of 1.5 x 10⁻² Pa, and a silicon oxide layer having a thickness of 30 nm was formed as an inorganic thin film layer on the PET film. The acceleration voltage during deposition was 40 kV, and the emission current was 0.2 A.

A coating liquid obtained by mixing hydrolyzed tetraethoxysilane and polyvinyl alcohol at a mass ratio of 1:1 was applied to the inorganic thin film layer by a bar-coating method, and dried and cured at 120°C for 1 minute, thereby forming a gas barrier covering layer having a thickness of 300 nm.

A silicon oxide layer having a thickness of 30 nm was formed as an inorganic thin film layer on the gas barrier covering layer by the same method as described above, and a gas barrier covering layer having a thickness of 300 nm was further formed on the inorganic thin film layer by the same method as described above. Thus, a first barrier film having a substrate, an inorganic thin film layer, a gas barrier covering layer, an inorganic thin film layer, and a gas barrier covering layer was obtained.

Next, an adhesive was applied to the gas barrier covering layer of the first barrier film to form an adhesive layer, and the adhesive layer was bonded together with a biaxially oriented polyethylene terephthalate (PET) film having a thickness of 16 µm, which was used as a second film, followed by aging at 40°C for 2 days. The adhesive used herein was the same as one used in Example 1. The thickness of the adhesive layer after curing was 5.0 µm.

Next, a coating liquid containing an acrylic resin and silica fine particles (mean particle size: 3 µm) was applied to the second film by a wet-coating method, thereby forming a matt layer having a thickness of 3 µm. Thus, a gas barrier laminated film was obtained.

### (Comparative Example 2)

A gas barrier laminated film was obtained in the same manner as in Example 1, except that the coating amount of the adhesive was adjusted so that the thickness of the adhesive layer after curing was 0.3 µm.

### (Comparative Example 3)

A gas barrier laminated film was obtained in the same manner as in Example 1, except that the adhesive used herein was obtained by adding a porous silica fine particle dispersion to the acrylic adhesive coating liquid used in Example 1, and the refractive index of the adhesive layer was adjusted to 1.40.

### (Comparative Example 4)

A gas barrier laminated film was obtained in the same manner as in Example 1, except that the adhesive used herein was obtained by adding a zirconia fine particle dispersion to the acrylic adhesive coating liquid used in Example 1, and the refractive index of the adhesive layer was adjusted to 1.60.

### <Measurement of Refractive Index>

The refractive indexes of the adhesive layer and the gas barrier covering layer in each of the gas barrier laminated films produced in the Examples and the Comparative Examples were determined in such a manner that the thickness of each layer was determined after the formation thereof, and then optical simulation was performed for spectral reflectance curves. In Examples 1 to 5 and Comparative Examples 2 to 4, the refractive index of the first gas barrier covering layer and the refractive index of the second gas barrier covering layer are the same. In Comparative Example 1, the refractive index of the gas barrier covering layer adjacent to the adhesive layer was measured. Moreover, the refractive index difference between the adhesive layer and the gas barrier covering layer was determined using the measurement results of refractive index. Table 1 shows the results.

### <Measurement of Light Transmittance>

The light transmittance of the gas barrier laminated films produced in the Examples and the Comparative Examples was measured at wavelengths of 450 nm, 550 nm, and 650 nm using a spectrophotometer (trade name: SHIMAZU UV-2450). In the measurement, the measuring light was applied from the side (PET film side) of each gas barrier laminated film opposite to the matt layer. Here, the most important transmittance is the transmittance of blue light at a wavelength of 450 nm, and this value is preferably 85.0% or more. Table 1 shows the results.

**[Table 1]**

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Film thickness of adhesive layer (µm) | | 5.0 | 3.0 | 9.0 | 5.0 | 5.0 | 5.0 | 0.3 | 5.0 | 5.0 |
| Distance D between two inorganic thin film layers (µm) | | 5.6 | 3.6 | 9.6 | 5.6 | 5.6 | 0.3 | 0.9 | 5.6 | 5.6 |
| Refractive index of adhesive layer | | 1.50 | 1.50 | 1.50 | 1.45 | 1.55 | 1.50 | 1.50 | 1.40 | 1.60 |
| Refractive index of gas barrier covering layer | | 1.50 | 1.50 | 1.50 | 1.50 | 1.50 | 1.50 | 1.50 | 1.50 | 1.50 |
| Refractive index difference | | 0.00 | 0.00 | 0.00 | 0.05 | 0.05 | 0.00 | 0.00 | 0.10 | 0.10 |
| Transmittance (%) | 450 nm | 86.6 | 86.1 | 86.7 | 85.5 | 85.7 | 84.7 | 84.2 | 84.5 | 84.3 |
| | 550 nm | 87.1 | 87.2 | 87.1 | 87.5 | 86.8 | 86.8 | 87.0 | 87.5 | 86.2 |
| | 650 nm | 87.4 | 87.2 | 87.3 | 87.1 | 87.3 | 87.1 | 87.2 | 87.3 | 87.4 |

As is clear from the results shown in Table 1, it was confirmed that the gas barrier laminated films of Examples 1 to 5, in which the distance D between the two inorganic thin film layers was 1.0 µm or more, and the refractive index difference between the adhesive layer and the gas barrier covering layer was 0.05 or less, had superior light transmittance, particularly 85.0% or more higher transmittance of blue light at 450 nm, compared with the gas barrier laminated films of Comparative Examples 1 to 4, which did not satisfy the above requirements.

### [Industrial Applicability]

The gas barrier laminated film of the present invention can be suitably used as a wavelength conversion sheet including emitters, particularly a wavelength conversion sheet including quantum dot emitters, for use in backlight units of liquid crystal displays; an electroluminescent light-emitting unit; and a substrate for industrial materials, such as solar cells.

### [Reference Signs List]

- 1: First barrier film
- 2: Second barrier film
- 4: Adhesive layer
- 5: Matt layer
- 7: Phosphor layer
- 8: Phosphor
- 9: Sealing resin
- 11: First substrate
- 13: First inorganic thin film layer
- 14: First gas barrier covering layer
- 15: First barrier layer
- 21: Second substrate
- 23: Second inorganic thin film layer
- 24: Second gas barrier covering layer
- 25: Second barrier layer
- 30: LED light source
- 40: Light guide plate
- 100: Gas barrier laminated film
- 200: Wavelength conversion sheet
- 500: Backlight unit

## Claims

1. A gas barrier laminated film (100) comprising:
a first barrier film (1) having a first substrate (11), a first inorganic thin film layer (13) formed on the first substrate (11), and a first gas barrier covering layer (14) formed on the first inorganic thin film layer (13); and
a second barrier film (2) having a second substrate (21), a second inorganic thin film layer (23) formed on the second substrate (21), and a second gas barrier covering layer (24) formed on the second inorganic thin film layer (23), wherein
the first barrier film (1) and the second barrier film (2) are laminated via an adhesive layer (4) so that the first gas barrier covering layer (14) and the second gas barrier covering layer (24) are opposite to each other, and
the distance between the first inorganic thin film layer (13) and the second inorganic thin film layer (23) is 1.0 µm or more,
**characterized in that**
the thickness of the first and second gas barrier covering layers (14, 24) is 100 nm to 1000 nm, and
the refractive index difference between the first gas barrier covering layer (14) and the adhesive layer (4), and the refractive index difference between the second gas barrier covering layer (24) and the adhesive layer (4) are both 0.05 or less.

2. The gas barrier laminated film (100) according to claim 1, wherein the distance between the first inorganic thin film layer (13) and the second inorganic thin film layer (23) is 20 µm or less.

3. A wavelength conversion sheet (200) comprising a phosphor layer (7) containing one or more phosphors (8), and the gas barrier laminated film (100) according to claim 1 or 2.

4. Use of the wavelength conversion sheet (200) according to claim 3 in a backlight unit (500) including a light guide plate (40) and an LED light source (30), the inside of the LED light source (30) being provided with a plurality of LED elements emitting blue light.

## Patentansprüche

1. Gasbarriereverbundfolie (100) mit:
einer ersten Barrierefolie (1), die ein erstes Substrat (11), eine erste anorganische Dünnfilmschicht (13), die auf dem ersten Substrat (11) ausgebildet ist, und eine erste Gasbarrieredeckschicht (14) hat, die auf der ersten anorganischen Dünnfilmschicht (13) ausgebildet ist; und
einer zweiten Barrierefolie (2), die ein zweites Substrat (21), eine zweite anorganische Dünnfilmschicht (23), die auf dem zweiten Substrat (21) ausgebildet ist, und eine zweite Gasbarrieredeckschicht (24) hat, die auf der zweiten anorganischen Dünnfilmschicht (23) ausgebildet ist, wobei
die erste Barrierefolie (1) und die zweite Barrierefolie (2) über eine Klebeschicht (4) laminiert sind, sodass die erste Gasbarrieredeckschicht (14) und die zweite Gasbarrieredeckschicht (24) einander gegenüberliegen, und
der Abstand zwischen der ersten anorganischen Dünnfilmschicht (13) und der zweiten anorganischen Dünnfilmschicht (23) 1,0 µm oder mehr beträgt,
**dadurch gekennzeichnet, dass**
die Dicke der ersten und zweiten Gasbarrieredeckschichten (14, 24) 100 nm bis 1000 nm beträgt und
die Brechzahldifferenz zwischen der ersten Gasbarrieredeckschicht (14) und der Klebeschicht (4) und die Brechzahldifferenz zwischen der zweiten Gasbarrieredeckschicht (24) und der Klebeschicht (4) beide 0,05 oder weniger betragen.

2. Gasbarriereverbundfolie (100) nach Anspruch 1, wobei der Abstand zwischen der ersten anorganischen Dünnfilmschicht (13) und der zweiten anorganischen Dünnfilmschicht (23) 20 µm oder weniger beträgt.

3. Wellenlängenumwandlungslage (200), die eine Leuchtstoffschicht (7), die ein oder mehr Leuchtstoffe (8) enthält, und die Gasbarriereverbundfolie (100) nach Anspruch 1 oder 2 umfasst.

4. Verwendung der Wellenlängenumwandlungslage (200) nach Anspruch 3 in einer Hintergrundbeleuchtungseinheit (500), die eine Lichtleiterplatte (40) und eine LED-Lichtquelle (30) enthält, wobei das Innere der LED-Lichtquelle (30) mit einer Vielzahl von LED-Elementen versehen ist, die blaues Licht emittieren.

## Revendications

1. Film stratifié de barrière aux gaz (100) comprenant :
un premier film de barrière (1) ayant un premier substrat (11), une première couche de film mince inorganique (13) formée sur le premier substrat (11), et une première couche de protection de barrière aux gaz (14) formée sur la première couche de film mince inorganique (13) ; et
un deuxième film de barrière (2) ayant un deuxième substrat (21), une deuxième couche de film mince inorganique (23) formée sur le deuxième substrat (21), et une deuxième couche de protection de barrière aux gaz (24) formée sur la deuxième couche de film mince inorganique (23), dans lequel
le premier film de barrière (1) et le deuxième film de barrière (2) sont stratifiés via une couche adhésive (4) de façon que la première couche de protection de barrière aux gaz (14) et la deuxième couche de protection de barrière aux gaz (24) soient opposées l'une à l'autre, et
la distance entre la première couche de film mince inorganique (13) et la deuxième couche de film mince inorganique (23) est de 1,0 µm ou plus,
**caractérisé en ce que**
l'épaisseur des première et deuxième couches de protection de barrière aux gaz (14, 24) est de 100 nm à 1000 nm, et
la différence d'indice de réfraction entre la première couche de protection de barrière aux gaz (14) et la couche adhésive (4), et la différence d'indice de réfraction entre la deuxième couche de protection de barrière aux gaz (24) et la couche adhésive (4), sont toutes deux de 0,05 ou moins.

2. Film stratifié de barrière aux gaz (100) selon la revendication 1, dans lequel la distance entre la première couche de film mince inorganique (13) et la deuxième couche de film mince inorganique (23) est de 20 µm ou moins.

3. Feuille de conversion de longueur d'onde (200) comprenant une couche luminescente (7) contenant un ou plusieurs luminophores (8), et le film stratifié de barrière aux gaz (100) selon la revendication 1 ou 2.

4. Utilisation de la feuille de conversion de longueur d'onde (200) selon la revendication 3 dans une unité de rétroéclairage (500) comprenant une plaque de guide d'onde (40) et une source de lumière à DEL (30), l'intérieur de la source de lumière à DEL (30) étant dotée d'une pluralité d'éléments de DEL émettant une lumière bleue.
